# EUROPÄISCHE PATENTSCHRIFT

(11) **EP 3 154 805 B1**
(45) Veröffentlichungstag und Bekanntmachung des Hinweises auf die Patenterteilung: **21.11.2018**
(21) Anmeldenummer: 15759698.2
(22) Anmeldetag: 24.08.2015
(51) Int. Cl.: B60J 10/80, B61D 19/00, B61D 19/02, B60J 5/06, E06B 7/23

(54) **SCHIEBETÜR**
SLIDING DOOR
PORTE COULLISANTE

(30) Priorität: 29.08.2014 DE 102014217343
(43) Veröffentlichungstag der Anmeldung: 19.04.2017
(73) Patentinhaber: Siemens Mobility GmbH, 81739 München (DE)
(72) Erfinder: KRÜGER, Axel, 47799 Krefeld (DE)
(86) Internationale Anmeldenummer: PCT/EP2015/069333
(87) Internationale Veröffentlichungsnummer: WO 2016/030319

(56) Entgegenhaltungen:
- WO-A1-2012/140004
- DE-A1- 2 702 245

## Beschreibung

Die Erfindung bezieht sich auf eine Schiebetür mit zumindest einem Türflügel, der durch Verschieben in eine geöffnete und eine geschlossene Stellung gebracht werden kann, sowie auf Fahrzeuge, die mit derartigen Schiebetüren ausgestattet sind.

Beispielsweise sind von den S-Bahnwagen der Berliner S-Bahn des Typs ET 165 (später Baureihe 275 der Deutschen Reichsbahn bzw. 475 der Deutschen Bundesbahn) Taschenschiebetüren bekannt. Konstruktionsbedingt können die Türflügel dieser Taschenschiebetüren nicht bündig mit der Fahrzeugaußenwand der S-Bahnwagen abschließen, sondern müssen nach innen versetzt angeordnet sein. Durch diesen Rücksprung kommt es zu Luftverwirbelungen und Staudrücken. Diese beiden Effekte können dazu führen, dass untemperierte Außenluft ins Fahrzeuginnere eindringt, die Fahrzeugklimatisierung beeinträchtigt wird und sich das Geräuschniveau im Fahrzeuginneren erhöht. Je schneller das Fahrzeug fährt, desto gravierender wird dieser Effekt. Bei S-Bahnwagen des Typs ET 165 treten bzw. traten diese Probleme nicht oder zumindest nicht signifikant auf, da die S-Bahnwagen lediglich mit verhältnismäßig geringer Geschwindigkeit fahren bzw. fuhren.

Die Druckschrift WO 2012/140004 A1 offenbart eine Schiebetür nach Oberbegriff des unabhängigen Patentanspruchs 1.

Die Offenlegungsschrift DE 27 02 245 A1 lehrt ein strangförmiges Profil zum Abdichten eines Spalts zwischen einer Schiebetür und ihrem Rahmen.

Der Erfindung liegt demgemäß die Aufgabe zugrunde, eine Schiebetür anzugeben, die eine gegenüber bisherigen Schiebetüren bessere Dichtwirkung aufweist und insbesondere bei schnell fahrenden Fahrzeugen eingesetzt werden kann.

Diese Aufgabe wird erfindungsgemäß durch eine Schiebetür mit den Merkmalen gemäß Patentanspruch 1 gelöst. Vorteilhafte

Ausgestaltungen der erfindungsgemäßen Schiebetür sind in Unteransprüchen angegeben.

Danach ist vorgesehen, dass die Schiebetür zumindest eine Feder aufweist, die in der geschlossenen Stellung der Schiebetür eine die Schiebetür nach außen abdichtende Dichtlippe einer am Türflügel angebrachten Dichtung auf eine rahmenseitige Dichtfläche presst. Bezüglich der Anordnung der Dichtung und der Feder gilt, dass sowohl die Dichtung als auch die Feder an einer Hinterkante des abzudichtenden Türflügels angebracht sind.

Ein wesentlicher Vorteil der erfindungsgemäßen Schiebetür ist darin zu sehen, dass die vorgesehene Feder die Dichtwirkung der Dichtlippe insgesamt signifikant erhöht. Durch die zusätzliche Andrückkraft der Feder lässt sich eine ausreichende Dichtwirkung der Dichtung und eine ausreichende Dichtigkeit der Schiebetür insgesamt auch dann erreichen, wenn die Schiebetür bei schnell fahrenden Fahrzeugen, insbesondere Schienenfahrzeugen, eingesetzt wird.

Bezüglich der Ausgestaltung der Feder wird es als vorteilhaft angesehen, wenn diese durch eine Blechfeder, insbesondere eine Federstahlblechfeder, gebildet ist.

Vorzugsweise besteht die Dichtlippe oder die Dichtung insgesamt aus Gummi.

Mit Blick auf eine optimale Federwirkung der Feder wird es als vorteilhaft angesehen, wenn die Feder eine Vielzahl an Durchgangslöchern, insbesondere ausgestanzten Abschnitten, aufweist, die entlang der Längsrichtung der Dichtlippe gesehen beabstandet zueinander angeordnet sind. Die Durchgangslöcher trennen vorzugsweise einen Verbindungssteg der Feder von einen Federgrundkörper der Feder. Die Anordnung und Größe der Durchgangslöcher bestimmen die Flexibilität des Verbindungsstegs relativ zum Federgrundkörper und damit die Federwirkung der Feder gegenüber der Dichtung. Der Verbindungssteg, dessen äußerer Stegrand bevorzugt geradlinig ist, liegt bevorzugt parallel zum Dichtlippenende der Dichtlippe der Dichtung.

Eine lokale Anpassung der Federwirkung der Feder lässt sich erreichen, wenn die Größe der Durchgangslöcher und/oder deren Abstand zueinander entlang des Verbindungsstegs unterschiedlich ist bzw. variiert wird.

Alternativ oder zusätzlich kann vorgesehen sein, dass die Feder eine kammartige Struktur mit Federzinken aufweist, die sich von einem Federgrundkörper der Feder weg in Richtung des Dichtlippenendes der Dichtlippe erstrecken. Eine lokale Anpassung der Federwirkung der Feder wird vorzugsweise dadurch erreicht, dass der Abstand der Federzinken und/oder die Breite der Federzinken entlang der kammartigen Struktur unterschiedlich ist bzw. variiert.

Zur Befestigung der Feder, insbesondere zur Befestigung der Feder an der Dichtung, weist die Feder vorzugsweise Befestigungslöcher auf. Die Befestigungslöcher sind bevorzugt im Federgrundkörper der Feder vorgesehen.

Zur Befestigung der Feder ist vorzugsweise mindestens ein Schraubelement, bevorzugt in Form einer Schraube, vorgesehen, mit dem die Feder auf der Dichtung aufgeschraubt ist. Die Schraubelemente bzw. Schrauben sind vorzugsweise jeweils durch eines der Befestigungslöcher im Federgrundkörper der Feder hindurchgeführt.

Bezüglich der Schraubverbindungen wird es als vorteilhaft angesehen, wenn jeweils ein ein Gewinde aufweisendes Distanzelement in eine Vertiefung der Dichtung eingeschoben ist, die Schraube mit dem Distanzelement verschraubt ist und zwischen dem Distanzelement und dem Schraubenkopf der Schraube ein Abschnitt der Dichtung und ein Abschnitt der Feder eingeklemmt sind. Die Vertiefung, in die das Distanzelement eingeführt ist, wird vorzugsweise durch eine Rille gebildet, die parallel zum Dichtlippenende der Dichtlippe der Dichtung und/oder parallel zum äußeren Stegrand des Verbindungsstegs liegt.

Bezüglich der Montage der Dichtung am Türflügel wird es als vorteilhaft angesehen, wenn die Dichtung in einem türseitigen Aufnahmeabschnitt der Schiebetür mittels eines Formschlussabschnitts verrastet und/oder eingeklemmt ist.

Bei der Schiebetür handelt es sich vorzugsweise um eine Taschenschiebetür.

Die Erfindung bezieht sich darüber hinaus auf ein Fahrzeug, das mit einer Schiebetür ausgestattet ist. Erfindungsgemäß ist bezüglich eines solchen Fahrzeugs vorgesehen, dass die Schiebetür wie oben erläutert ausgebildet ist.

Bei dem Fahrzeug handelt es sich vorzugsweise um ein Schienenfahrzeug.

Die Erfindung wird nachfolgend anhand von Ausführungsbeispielen näher erläutert; dabei zeigen beispielhaft
- Figur 1: ein Ausführungsbeispiel für eine erfindungsgemäße Schiebetür, die in einem Schienenfahrzeug montiert ist, wobei die Figur 1 die geöffnete Stellung der Schiebetür zeigt,
- Figur 2: die Schiebetür gemäß Figur 1 im geschlossenen Zustand,
- Figur 3: die mit dem Bezugszeichen III in der Figur 2 markierte Einzelheit im Querschnitt näher im Detail, wobei sich die Funktionsweise einer auf eine türflügelseitige Dichtung einwirkenden Feder - bei geschlossener Stellung der Schiebetür - erkennen lässt,
- Figur 4: die Einzelheit gemäß Figur 3 zur weiteren Erläuterung bei geöffneter Stellung der Schiebetür,
- Figur 5: ein Ausführungsbeispiel für eine Feder, wie sie bei der Schiebetür gemäß den Figuren 1 bis 4 eingesetzt werden kann, näher im Detail und
- Figur 6: ein weiteres Ausführungsbeispiel für eine Feder, die bei der Schiebetür gemäß den Figuren 1 bis 4 eingesetzt werden kann.

In den Figuren werden der Übersicht halber für identische oder vergleichbare Komponenten stets dieselben Bezugszeichen verwendet.

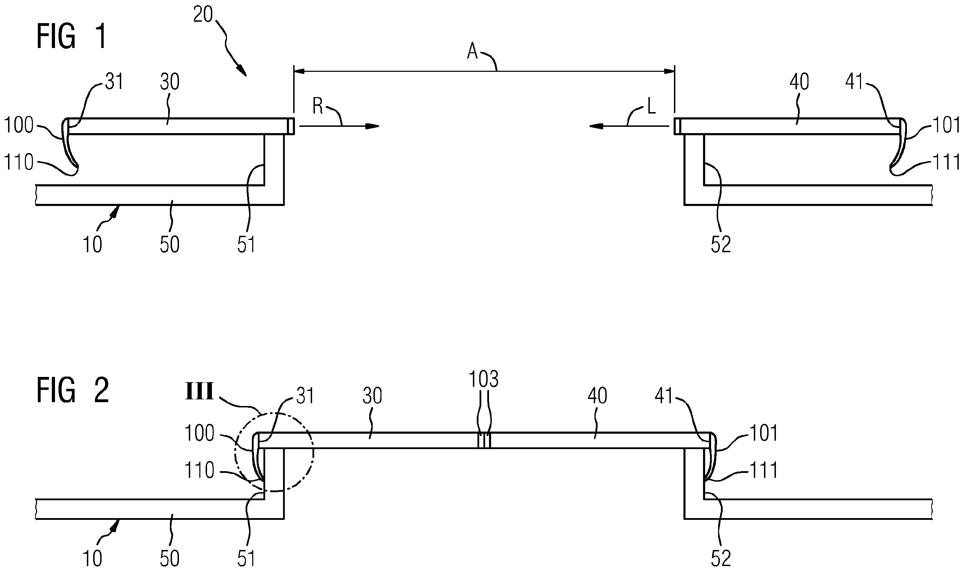

Die Figur 1 zeigt in einer Sicht von oben ein Ausführungsbeispiel für eine Schiebetür 10, die in einem nicht weiter dargestellten Schienenfahrzeug 20 montiert ist. Die Schiebetür 10 umfasst zwei Türflügel 30 und 40, die sich durch Verschieben entlang der Pfeilrichtung R bzw. der Pfeilrichtung L von der in der Figur 1 dargestellten geöffneten Stellung in ihre geschlossene Stellung überführen lassen. Die lichte Durchgangsweite der geöffneten Schiebetür 10 ist in der Figur 1 mit dem Bezugszeichen A gekennzeichnet.

In der Figur 1 lässt sich erkennen, dass der in der Figur 1 linke Türflügel 30 mit einer Dichtung 100 ausgestattet ist, die im Bereich der Hinterkante 31 bzw. an der Hinterkante 31 des Türflügels 30 montiert ist. Die Dichtung 100 umfasst eine Dichtlippe 110, die aus der Ebene des Türflügels 30 herausragt und somit in der Lage ist, in der geschlossenen Stellung des Türflügels 30 mit einer rahmenseitigen Dichtfläche 51 eines Türrahmens 50 der Schiebetür 10 zusammenzuwirken.

Um eine entsprechende Abdichtung des Türflügels 40 in der geschlossenen Stellung zu ermöglichen, ist der Türflügel 40 ebenfalls mit einer Dichtung 101 versehen, die im Bereich der Hinterkante 41 des Türflügels 40 bzw. an der Hinterkante 41 des Türflügels 40 montiert ist. Die an dem Türflügel 40 montierte Dichtung 101 umfasst eine Dichtlippe 111, die aus der Ebene des Türflügels 40 herausragt und somit mit einer rahmenseitigen Dichtfläche 52 des Türrahmens 50 zusammenwirken kann, wenn der Türflügel 40 von der in der Figur 1 dargestellten geöffneten Stellung in seine geschlossene Stellung überführt wird.

Die Figur 2 zeigt die Schiebetür 10 gemäß Figur 1 in ihrer geschlossenen Stellung. Es lässt sich erkennen, dass - ausgehend von der Darstellung gemäß Figur 1 - der linke Türflügel 30 entlang der Pfeilrichtung R nach rechts und der rechte Türflügel 40 entlang der Pfeilrichtung L nach links verschoben worden ist und die beiden Türflügel mit ihren vorderen Stirnfläche aneinander anliegen. Die vorderen Stirnflächen sind vorzugsweise mit Dichtungen versehen, die in der Figur 2 durch Bezugszeichen 103 angedeutet sind.

Darüber hinaus lässt die Figur 2 die Funktionsweise der beiden Dichtungen 100 und 101 erkennen, die an den Hinterkanten 31 bzw. 41 der beiden Türflügel 30 und 40 angebracht sind. So zeigt die Figur 2, dass die Dichtlippen 110 und 111 jeweils auf der ihnen zugeordneten rahmenseitigen Dichtfläche 51 bzw. 52 des Türrahmens 50 aufliegen und somit die Schiebetür 10 im Bereich der Hinterkanten 31 und 41 der Türflügel 30 bzw. 40 in der geschlossenen Türstellung abdichten.

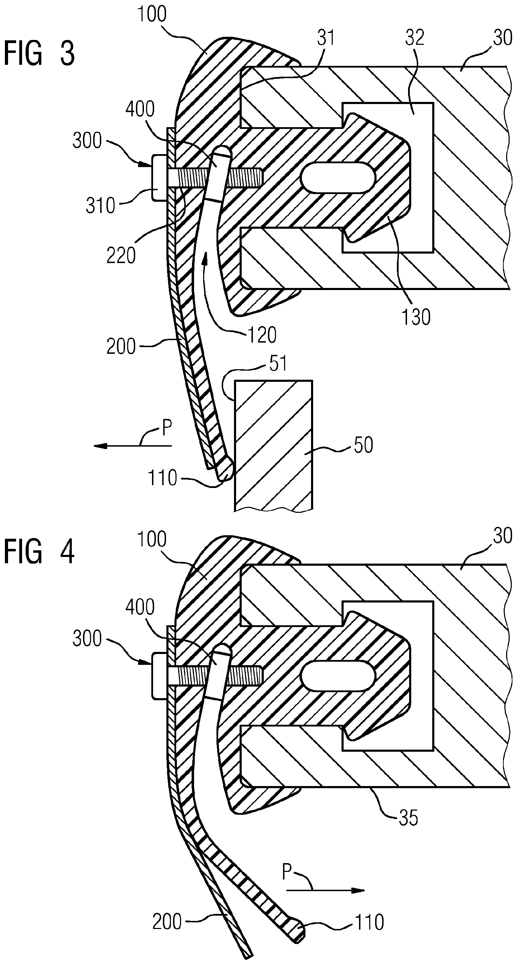

Um eine besonders große Dichtwirkung der Dichtungen 100 und 101 auch bei Fahrt des Schienenfahrzeugs 20 zu gewährleisten - insbesondere eine Dichtwirkung, die die bei Taschenschiebetüren von Schienenfahrzeugen der eingangs erwähnten Baureihe des Typs ET 165 deutlich überschreitet - werden die Dichtlippen 110 und 111 der beiden Dichtungen 100 und 101 mittels jeweils einer Feder an die zugeordnete rahmenseitige Dichtfläche 51 bzw. 52 gedrückt. Die Funktionsweise dieser Federn wird nachfolgend im Zusammenhang mit der Figur 3 näher erläutert, die die in der Figur 2 mit dem Bezugszeichen III markierte Einzelheit der Schiebetür 10 näher im Detail zeigt.

In der Figur 3 ist der Türflügel 30 mit seiner Dichtung 100 in einem Querschnitt näher im Detail gezeigt. Es lässt sich erkennen, dass außen auf der Dichtung 100 eine Feder in Form einer Blechfeder, vorzugsweise einer Blechfeder aus Federstahlblech, aufliegt. Die Feder 200 ist mittels einer Schraube 300 und eines Distanzelements 400 (z. B. in Form einer Mutter) auf der Dichtung 100 aufgeschraubt. Das Distanzelement 400 ist zu diesem Zweck in eine rillenförmige Vertiefung 120 der Dichtung 100 eingeführt, so dass ein Einschrauben der Schraube 300 in der in der Figur 3 dargestellten Position bzw. Weise möglich ist. Durch das Verschrauben der Schraube 300 wird die Feder 200 zwischen dem Schraubenkopf 310 und der Dichtung 100 eingeklemmt.

Die Funktion der Feder 200 besteht darin, die aus der Ebene des Türflügels 30 herausragende Dichtlippe 110 in der Figur 3 nach rechts bzw. in Richtung der Hinterkante 31 des Türflügels 30 zu drücken, so dass bei Erreichen der geschlossenen Stellung der Schiebetür 10 die Dichtlippe 110 mit besonders großem Anpressdruck auf der zugeordneten rahmenseitigen Dichtfläche 51 aufliegt.

Die in der Figur 3 dargestellte Stellung der Dichtlippe 110 und der Feder 200 wird also nur unter Deformation der Feder 200 erreicht, und zwar dann, wenn - in der geschlossenen Stellung des Türflügels 30 - die Dichtlippe 110 und die Feder 200 durch die rahmenseitige Dichtfläche 51 entlang der Pfeilrichtung P in der Figur 3 nach links weggedrückt werden.

Die Figur 3 zeigt darüber hinaus die Montage der Dichtung 100 an der Hinterkante 31 bzw. dem Türflügel 30 näher im Detail. Es lässt sich erkennen, dass der Türflügel 30 im Bereich seiner Hinterkante 31 mit einem Aufnahmeabschnitt in Form einer Ausnehmung 32, vorzugsweise in Form einer Befestigungsrille, ausgestattet ist. In die Ausnehmung 32 ist ein Formschlussabschnitt 130 der Dichtung 100 eingedrückt, die dadurch sowohl mittels Formschluss als auch mittels Verklemmen bzw. Reibschluss an der Hinterkante 31 bzw. im Bereich der Hinterkante 31 am Türflügel 30 gehalten wird.

Die Dichtung 101 am Türflügel 40 (vgl. Figuren 1 und 2) ist vorzugsweise mit der Dichtung 100 am Türflügel 30 baugleich und wird vorzugsweise ebenfalls mit der Federkraft einer Feder beaufschlagt; diese Feder ist vorzugsweise mit der an dem Türflügel 30 angebrachten Feder 200 baugleich. Die obigen Ausführungen im Zusammenhang mit der Dichtung 100 des Türflügels 30 und der Feder 200 gelten somit für die Dichtung 101 des Türflügels 40 gemäß den Figuren 1 und 2 entsprechend.

Die Figur 4 zeigt die Funktion der Feder 200 gemäß Figur 3 im geöffneten Zustand des Türflügels 30. Es lässt sich erkennen, dass aufgrund der Federkraft der Feder 200 die Dichtlippe 110 entlang der Pfeilrichtung P in der Figur 4 nach rechts verschwenkt worden ist und dadurch abschnittsweise in den Seitenwandbereich der Seitenwand 35 des Türflügels 30 bzw. bei der Darstellung gemäß Figur 4 in den Bereich unterhalb der Seitenwand 35 des Türflügels 30 hineinragt.

Wird - ausgehend von der geöffneten Stellung des Türflügels 30 gemäß Figur 4 - der Türflügel 30 geschlossen, so wird die Dichtlippe 110 bei Aufschlagen auf der rahmenseitigen Dichtfläche 51 des Türrahmens 50 (vgl. Figuren 1 bis 3) entgegen der Pfeilrichtung P in Figur 4 verschwenkt und nachfolgend aufgrund der Federkraft der Feder 200 auf die rahmenseitige Dichtfläche 51 aufgepresst, wie dies im Zusammenhang mit der Figur 3 oben erläutert worden ist.

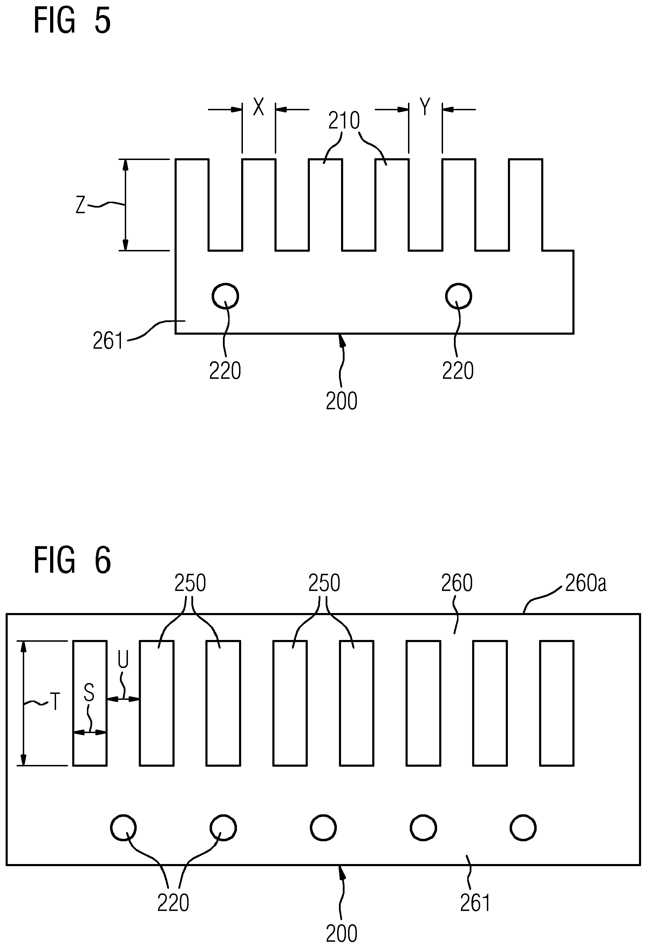

Die Figur 5 zeigt ein Ausführungsbeispiel für eine Feder 200, die bei der Schiebetür 10 gemäß den Figuren 1 bis 4 eingesetzt werden kann. Die Feder 200 gemäß Figur 5 wird durch ein Federstahlblech gebildet, das eine kammartige Struktur aufweist und randseitig Federzinken 210 umfasst, die im montierten Zustand der Feder 200 von einem Federgrundkörper 261 der Feder 200 aus in Richtung des Dichtlippenendes der Dichtlippe 110 bzw. 111 (vgl. Figuren 3 und 4) ragen.

Die Breite X der Federzinken 210, der Abstand Y zwischen den Federzinken 210 sowie die Länge Z der Federzinken 210 legen die Flexibilität der Feder 200 fest und sind derart gewählt, dass die im Zusammenhang mit den Figuren 3 und 4 beschriebene Federwirkung 200 zum Aufpressen der Dichtlippen 110 bzw. 111 auf die zugeordnete Dichtfläche 51 bzw. 52 des Türrahmens 50 (vgl. Figur 1) wie oben erläutert mit ausreichendem Anpressdruck auch bei schneller Fahrt (z. B. Geschwindigkeit über 120 km/h) des Schienenfahrzeugs 20 stattfinden kann.

Die Figur 5 zeigt darüber hinaus Befestigungslöcher 220, die ein Durchführen der Schraube 300 (vgl. Figuren 3 und 4) zwecks Verschrauben der Feder 200 auf der Dichtung 100 ermöglichen. Die Befestigungslöcher 220 sind vorzugsweise im Federgrundkörper 261 der Feder 200 angeordnet.

Die Figur 6 zeigt ein weiteres Ausführungsbeispiel für eine Feder 200, die bei der Schiebetür 10 gemäß den Figuren 1 bis 4 eingesetzt werden kann. Die Feder 200 gemäß Figur 6 ist mit Durchgangslöchern 250 in Form ausgestanzter Abschnitte versehen, deren Größe und Anordnung die Flexibilität der Feder 200 bestimmen.

Die Durchgangslöcher 250 sind bevorzugt entlang der Längsrichtung der Dichtlippe 110 bzw. 111 (vgl. Figuren 3 und 4) beabstandet zueinander angeordnet. Die Durchgangslöcher 250 trennen einen äußeren Verbindungssteg 260 von einem Federgrundkörper 261 der Feder 200. Der Verbindungssteg 260 weist einen äußeren Stegrand 260a auf, der geradlinig ist und parallel zum Dichtlippenende der Dichtlippe 110 bzw. 111 der Dichtung 100 bzw. 101 liegt (vgl. Figuren 3 und 4).

Die Breite S und die Länge T der Durchgangslöcher 250 sowie der Abstand U zwischen den Durchgangslöchern 250 sind vorzugsweise derart gewählt, dass die Federkraft der Feder 200 die zu einem Abdichten nötige Anpresskraft auf die Dichtung 100 bzw. 101 auch bei schneller Fahrt (z. B. Geschwindigkeit über 120 km/h) des Schienenfahrzeugs 20 ausüben kann, wie dies im Zusammenhang mit den Figuren 3 und 4 oben bereits eingehend erläutert worden ist.

Die Figur 6 zeigt darüber hinaus Befestigungslöcher 220, die ein Verschrauben der Feder 200 gemäß Figur 6 mittels der Schrauben 300 gemäß den Figuren 3 und 4 an der Dichtung 100 bzw. 101 ermöglichen. Die Befestigungslöcher 220 sind bevorzugt im Federgrundkörper 261 der Feder 200 angeordnet.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schiebetür (10) mit zumindest einem Türflügel (30, 40), der durch Verschieben in eine geöffnete und eine geschlossene Stellung gebracht werden kann, wobei die Schiebetür (10) zumindest eine Feder (200) aufweist, die in der geschlossenen Stellung der Schiebetür (10) eine die Schiebetür (10) nach außen abdichtende Dichtlippe (110, 111) einer am Türflügel (30, 40) angebrachten Dichtung (100, 101) auf eine rahmenseitige Dichtfläche (51, 52) presst, **dadurch gekennzeichnet, dass** sowohl die Dichtung (100, 101) als auch die Feder (200) an einer Hinterkante (31, 41) des Türflügels (30, 40) angebracht sind.

2. Schiebetür (10) Anspruch 1,
**dadurch gekennzeichnet, dass**
die zumindest eine Feder (200) durch eine Blechfeder aus Federstahlblech gebildet ist.

3. Schiebetür (10) nach einem der voranstehenden Ansprüche,
**dadurch gekennzeichnet, dass**
die Dichtlippe (110, 111) oder die Dichtung (100, 101) insgesamt aus Gummi besteht.

4. Schiebetür (10) nach einem der voranstehenden Ansprüche,
**dadurch gekennzeichnet, dass**
die Feder (200) eine Vielzahl an Durchgangslöchern (250), insbesondere in Form ausgestanzter Abschnitte, aufweist, die entlang der Längsrichtung der Dichtlippe (110, 111) gesehen beabstandet zueinander angeordnet sind und zwischen einem parallel zur Dichtlippe (110, 111) liegenden Stegrand (260a) eines Verbindungsstegs (260) der Feder (200) und einem Federgrundkörper (261) der Feder (200) liegen.

5. Schiebetür (10) nach einem der voranstehenden Ansprüche,
**dadurch gekennzeichnet, dass**
die Feder (200) eine kammartige Struktur mit in Richtung des Dichtlippenendes der Dichtlippe (110, 111) ragenden Federzinken (210) aufweist.

6. Schiebetür (10) nach Anspruch 5,
**dadurch gekennzeichnet, dass**
der Abstand der Federzinken (210) und/oder die Breite der Federzinken (210) entlang der kammartigen Struktur unterschiedlich ist.

7. Schiebetür (10) nach einem der voranstehenden Ansprüche,
**dadurch gekennzeichnet, dass**
die Feder (200) mit einer Schraube (300) auf der Dichtung (100, 101) aufgeschraubt ist.

8. Schiebetür (10) nach Anspruch 7,
**dadurch gekennzeichnet, dass**
- ein ein Gewinde aufweisendes Distanzelement (400) in eine rillenartige Vertiefung der Dichtung (100, 101) eingeschoben ist,
- die Schraube (300) mit dem Distanzelement (400) verschraubt ist und
- zwischen dem Distanzelement (400) und dem Schraubenkopf der Schraube (300) ein Abschnitt der Dichtung (100, 101) und ein Abschnitt der Feder (200) eingeklemmt sind.

9. Schiebetür (10) nach einem der voranstehenden Ansprüche,
**dadurch gekennzeichnet, dass**
die Dichtung (100, 101) in einem türseitigen Aufnahmeabschnitt des Türflügels (30, 40) verrastet und/oder eingeklemmt ist, insbesondere mittels eines Formschlussabschnitts (130) .

10. Schiebetür (10) nach einem der voranstehenden Ansprüche,
**dadurch gekennzeichnet, dass**
die Schiebetür (10) eine Taschenschiebetür ist.

11. Fahrzeug mit zumindest einer Schiebetür (10),
**dadurch gekennzeichnet, dass**
die Schiebetür (10) nach einem der voranstehenden Ansprüche ausgestaltet ist.

12. Fahrzeug nach Anspruch 11,
**dadurch gekennzeichnet, dass**
das Fahrzeug ein Schienenfahrzeug (20) ist.

## Claims

1. Sliding door (10) comprising at least one door leaf (30, 40) which can be brought into an open and a closed position by the displacement thereof, wherein the sliding door (10) comprises at least one spring (200) which, in the closed position of the sliding door (10), presses a sealing lip (110, 111) of a seal (100, 101) mounted on the door leaf (30, 40) against a sealing surface (51, 52) on the frame, said sealing lip sealing the sliding door (10) from the outside, **characterized in that** both the seal (100, 101) and the spring (200) are attached to a rear edge (31, 41) of the door leaf (30, 40).

2. Sliding door (10) according to Claim 1 **characterized in that** the at least one spring (200) is formed by a sheet metal spring made of spring steel sheet.

3. Sliding door (10) according to one of the preceding claims, **characterized in that** the sealing lip (110, 111) or the seal (100, 101) as a whole consists of rubber.

4. Sliding door (10) according to one of the preceding claims, **characterized in that** the spring (200) has a plurality of through-holes (250), in particular in the form of stamped-out portions which are arranged spaced apart from one another when viewed in the longitudinal direction of the sealing lip (110, 111) and are located between a web edge (260a) of a connecting web (260) of the spring (200) located parallel to the sealing lip (110, 111) and a spring base body (261) of the spring (200).

5. Sliding door (10) according to one of the preceding claims, **characterized in that** the spring (200) has a comb-like structure with spring tines (210) protruding in the direction of the sealing lip end of the sealing lip (110, 111).

6. Sliding door (10) according to Claim 5, **characterized in that** the spacing between the spring tines (210) and/or the width of the spring tines (210) along the comb-like structure is variable.

7. Sliding door (10) according to one of the preceding claims, **characterized in that** the spring (200) is screwed to the seal (100, 101) by a screw (300).

8. Sliding door (10) according to Claim 7, **characterized in that**
- a spacer element (400) comprising a thread is inserted into a groove-like recess of the seal (100, 101),
- the screw (300) is screwed to the spacer element (400) and
- a portion of the seal (100, 101) and a portion of the spring (200) are clamped between the spacer element (400) and the screw head of the screw (300).

9. Sliding door (10) according to one of the preceding claims, **characterized in that** the seal (100, 101) is latched and/or clamped in a receiver portion of the door leaf (30, 40) on the door side, in particular by means of a positive connecting portion (130).

10. Sliding door (10) according to one of the preceding claims, **characterized in that** Sliding door (10) is a sliding pocket door.

11. Vehicle comprising at least one sliding door (10), **characterized in that** the sliding door (10) is designed according to one of the preceding claims.

12. Vehicle according to Claim 11, **characterized in that** the vehicle is a rail vehicle (20).

## Revendications

1. Porte (10) coulissante ayant au moins un ventail (30, 40), qui, par coulissement, peut être mis dans une position ouverte et une position fermée, la porte (10) coulissante ayant au moins un ressort (200), qui, dans la position fermée de la porte (10) coulissante, presse, sur une surface (51, 52) d'étanchéité du côté du cadre, une lèvre (110, 111) d'étanchéité, rendant étanche vers l'extérieur la porte (10) coulissante, d'une étanchéité (100, 101) mise sur le ventail (30, 40), **caractérisée en ce que** à la fois l'étanchéité (100, 101) et le ressort (200) sont mis sur un bord (31, 41) arrière du ventail (30, 40).

2. Porte (10) coulissante suivant la revendication 1,
**caractérisée en ce que**
le au moins un ressort (200) est formé d'un ressort en tôle d'acier pour ressort.

3. Porte (10) coulissante suivant l'une des revendications précédentes,
**caractérisée en ce que**
la lèvre (110, 111) d'étanchéité ou l'étanchéité (100, 101) sont constituées, dans l'ensemble, en caoutchouc.

4. Porte (10) coulissante suivant l'une des revendications précédentes,
**caractérisée en ce que**
le ressort (200) a une pluralité de perçages (250), notamment sous la forme de parties estampées, qui, considérés suivant la direction longitudinale de la lèvre (110, 111) d'étanchéité, sont disposés à distance les uns des autres et sont entre un bord (260a), parallèle à la lèvre (110, 111) d'étanchéité, d'une réglette (260) de liaison du ressort (200) et un corps (261) de base du ressort (200).

5. Porte (10) coulissante suivant l'une des revendications précédentes,
**caractérisée en ce que**
le ressort (200) a une structure en peigne ayant des doigts (210) dans la direction de l'extrémité de la lèvre (110, 111) d'étanchéité.

6. Porte (10) coulissante suivant la revendication 5,
**caractérisée en ce que**
la distance entre les doigts (210) et/ou la largeur des doigts (210) est différente le long de la structure en peigne.

7. Porte (10) coulissante suivant l'une des revendications précédentes,
**caractérisée en ce que**
le ressort (200) est vissé sur l'étanchéité (100, 101) par une vis (300).

8. Porte (10) coulissante suivant la revendication 7, **caractérisée en ce que**
- un élément (400) d'entretoisement ayant un filetage est inséré dans une cavité de type rainure de l'étanchéité (100, 101),
- la vis (300) est vissée à l'élément (400) d'entretoisement et
- entre l'élément (400) d'entretoisement et la tête de la vis (300), est serrée une partie de l'étanchéité (100, 101) et une partie du ressort (200).

9. Porte (10) coulissante suivant l'une des revendications précédentes,
**caractérisée en ce que**
l'étanchéité (100, 101) est encliquetée et/ou serrée dans une partie de logement du côté de la porte du ventail (30, 40), notamment au moyen d'une partie (130) à complémentarité de forme.

10. Porte (10) coulissante suivant l'une des revendications précédentes,
**caractérisée en ce que**
la porte (10) coulissante est une porte coulissante à poche.

11. Véhicule ayant au moins une porte (10) coulissante,
**caractérisé en ce que**
la porte (10) coulissante est conformée suivant l'une des revendications précédentes.

12. Véhicule suivant la revendication 11,
**caractérisé en ce que**
le véhicule est un véhicule (20) ferroviaire.
